# EUROPEAN PATENT APPLICATION

(11) **EP 3 467 900 A1**
(43) Date of publication of application: **10.04.2019**
(21) Application number: 17805610.7
(22) Date of filing: 04.05.2017
(51) Int. Cl.: H01M 2/10, H01M 2/02

(54) **BATTERY PACKAGING MATERIAL AND PREPARATION METHOD THEREFOR, BATTERY PACK SEAL COVER, BATTERY PACK BODY, POWER BATTERY AND ELECTRIC VEHICLE**

(30) Priority: 31.05.2016 CN 201610379429
(71) Applicant: BYD Company Limited, Shenzhen, Guangdong 518118 (CN)
(72) Inventor: TAN, Jing, Shenzhen Guangdong 518118 (CN); ZHENG, Weixin, Shenzhen Guangdong 518118 (CN); ZHU, Yan, Shenzhen Guangdong 518118 (CN); SHEN, Xi, Shenzhen Guangdong 518118 (CN)
(74) Representative: Hoffmann Eitle
(86) International application number: PCT/CN2017/083113
(87) International publication number: WO 2017/206665

(57) **Abstract**

This application provides a battery packaging material and a method for preparing same, a battery pack sealing cover, a battery pack body, a power battery and an electric vehicle. The battery packaging material includes a fiber layer, where the fiber layer contains a mesh structure, and holes of the mesh structure are filled with a bonding agent.

## Description

### CROSS REFERENCE TO RELATED APPLICATIONS

This application is proposed based on Chinese Patent Application No. 201610379429.5, filed on May 31, 2016, and claims priority to the Chinese Patent Application, which is incorporated herein by reference in its entirety.

### BACKGROUND

### Technical Field

This application relates to the field of batteries, particularly to the field of power batteries applied to an electric vehicle, and specifically to a battery packaging material and a method for preparing same, a battery pack sealing cover, a battery pack body, a power battery and an electric vehicle.

### Related Art

As an energy storage unit, a battery plays an important role in various industries. For example, a power battery is widely applied to fields such as the field of new energy vehicles. A battery pack of the power battery includes a battery module formed by connecting a plurality of battery cells to each other in series, so as to implement charging or discharging. When the power battery is in a charging or a discharging process, a state of charge is usually calculated by monitoring changes in a voltage and a current by using a BMS (battery management system). If a problem occurs in voltage sampling, the battery may be overcharged. In particular, for a ternary system, if the battery is overcharged to an extent, even a risk of battery burning or explosion occurs. With fast development of the power battery in hybrid vehicles and pure electric vehicles, more attentions are paid to weight and safety problems. In the related art, a PP (polypropylene) vacuum-formed plastic sealing cover or a metal (for example, steel or aluminum) sealing cover is usually used as a battery pack sealing cover of the power battery. The metal sealing cover has a large weight and high costs, and is non-insulated. The PP vacuum-formed plastic sealing cover is mostly used. However, the PP vacuum-formed plastic sealing cover is prepared from plastic PP in a vacuum plastic forming manner, and is usually of a single-layered PP structure. If a fire breaks out in a battery group in a pack body, the PP vacuum-formed plastic sealing cover cannot prevent the fire from spreading, but instead aggravate spreading of the fire, to bring a hidden danger to safety.

### SUMMARY

To overcome the problems in the related art that the battery packaging material has a large weight and high costs, and is non-insulated and unsafe, this application provides a battery packaging material that has a small weight and low costs and particularly insulation and safer, a method for preparing same, a battery pack sealing cover prepared thereby, a battery pack body, a power battery and an electric vehicle.

A first objective of this application is to provide a battery packaging material, including a fiber layer and a bonding agent, where the fiber layer contains a mesh structure, and holes of the mesh structure are filled with a bonding agent.

A second objective of this application is to provide a method for preparing the foregoing battery packaging material, including: providing a fiber layer, wherein the fiber layer contains a mesh structure, attaching a slurry containing a bonding agent or containing a bonding agent and an insulating polymeric material to a surface of a fiber layer, and drying.

A third objective of this application is to provide a battery pack sealing cover, including the foregoing battery packaging material.

A fourth objective of this application is to provide a battery pack body, including a tray and a battery pack sealing cover sealed with the tray to form a battery accommodation space, where the battery pack sealing cover is the foregoing battery pack sealing cover.

A fifth objective of this application is to provide a power battery, including a battery pack body and a battery group located inside the battery pack body, where the battery pack body is the foregoing battery pack body.

A sixth objective of this application is to provide an electric vehicle, including the foregoing power battery.

### BRIEF DESCRIPTION OF THE DRAWINGS

FIG. 1 is a schematic structural diagram of a mesh structure inside a fiber layer according to a specific implementation of this application;
FIG. 2 is a schematic three-dimensional structural diagram of a battery pack sealing cover according to a specific implementation of this application; and
FIG. 3 is a schematic three-dimensional structural diagram of a power battery according to a specific implementation of this application.

### Reference numerals:

1 battery pack sealing cover
2 tray

### DETAILED DESCRIPTION

To make technical problems resolved by this application, technical solutions, and beneficial effects more comprehensible, the following further describes this application in detail with reference to the accompanying drawings and embodiment. It should be understood that the specific embodiment described herein is only used to explain this application but shall not limit this application.

This application provides a battery packaging material, including a fiber layer and a bonding agent, where the fiber layer contains a mesh structure, and holes of the mesh structure are filled with a bonding agent, to form a sealable whole that has a small weight and low costs and is insulating. The bonding agent filled in the holes can be melted or volatilized at a high temperature, so that the battery packaging material has an air permeability, and gas generated in a battery can be effectively discharged. The high temperature of this application is a temperature at which the battery is abnormal and a risk may further occur. In an embodiment of this application, the high temperature may be 80°C to 120°C. A filling manner is also not limited in this embodiment of this application, and various filling methods may be used.

The filling of this application means that the holes contain the bonding agent, and all or some holes may be filled with the bonding agent. For example, the holes may also be further filled with an insulating polymeric material or the like; or a bonding agent layer or a mixture layer which includes a bonding agent and an insulating polymeric material is further attached to a surface of the fiber layer, and the bonding agent layer or the mixture layer may be attached to a single surface of the fiber layer or both surfaces of the fiber layer. In this case, only some bonding agents or the like need to be permeated in the mesh structure in the fiber layer.

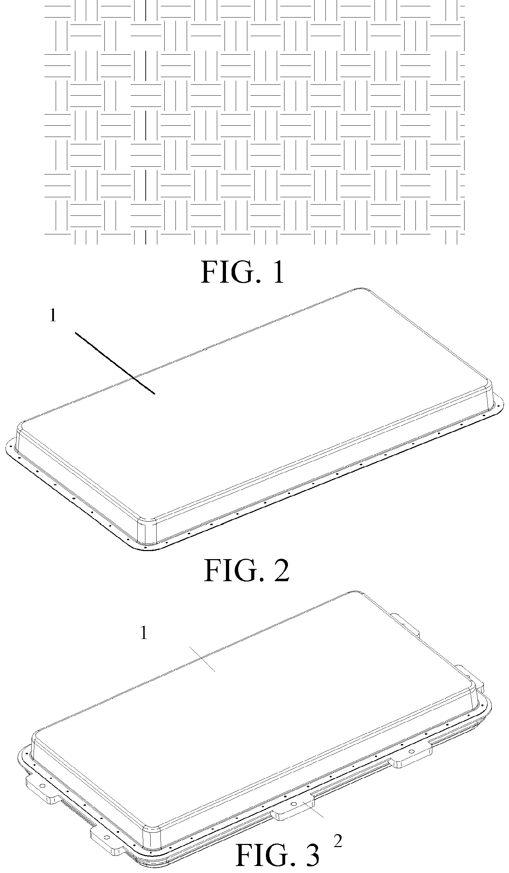

The mesh structure is not limited in this embodiment of this application, may be an ordered mesh structure or may be a disordered mesh structure, and is formed by a fiber material in the fiber layer. In this embodiment of this application, the mesh structure is a fiber woven mesh structure. As shown in FIG. 1, the mesh structure may be an ordered woven mesh structure. In this embodiment of this application, the fiber layer is an integral single-layered structure formed by the fiber material. In this embodiment of this application, a material of the fiber layer includes one or two of carbon fiber or glass fiber. Both the carbon fiber and the glass fiber are characterized by a high strength, corrosion resistance, high temperature resistance and the like, it is conducive to form the mesh structure, so as to implement a fire insulation function. In this embodiment of this application, the mesh structure is formed by crossing glass fiber bundles and carbon fiber bundles, or the mesh structure is formed by crossing glass fiber bundles, or the mesh structure is formed by crossing carbon fiber bundles. In this embodiment of this application, the mesh structure is formed by crossing carbon fiber bundles and latitudinal glass fiber bundles. A schematic diagram of the mesh structure is shown in FIG. 1, and the mesh structure is an ordered woven mesh structure. In this embodiment of this application, the glass fiber bundle is formed by twisting 2000 to 5000 glass fiber filaments, and the carbon fiber bundle is formed by twisting 3000 to 10000 carbon fiber filaments. In this embodiment of this application, the glass fiber filament has a diameter of 10 µm to 25 µm, and the carbon fiber filament has a diameter of 5 µm to 8 µm. The mesh structure will be more perfect, and more favorable to permeation of the bonding agent and can form a more perfect hole structure at a high temperature, and the formed battery packaging material has a higher strength, to be more favorable to preparation of a battery pack sealing cover having excellent performance. In this embodiment of this application, the fiber layer has a thickness of 0.5 mm to 1.5 mm, and functions of the battery pack sealing cover such as being waterproof, sealing, and protection may be more effectively implemented in a normal situation. Moreover, when the battery is in an abnormal condition, and particularly in an extreme situation such as burning, the fiber layer may relatively well cover an internal open fire, so as to isolate an internal flame from extending outward, and particularly from spreading toward a driving compartment, thereby improving safety of a whole vehicle.

A filling amount of the bonding agent in the fiber layer is not limited in this embodiment of this application, and is usually preferably saturated. Specifically, the bonding agent may be permeated and filled in the fiber layer in a manner such as soaking or coating the fiber layer, and to reach saturation.

In this embodiment of this application, the holes of the mesh structure are further filled with an insulating polymeric material, to further enhance mechanical performance and insulation performance of the battery pack sealing cover. A manner of permeating and filling the mixture of bonding agent and the insulating polymeric material may be used. In this embodiment of this application, a weight ratio of the bonding agent to the insulating polymeric material is 1:0.8 to 1:1.2.

In this embodiment of this application, a surface of the fiber layer is further compounded with an insulating film layer. Compounding may be performed on a single surface or both surfaces of the fiber layer, so as to improve insulation performance of the battery pack sealing cover, and improve safety of the entire battery pack body. A material of the insulating film layer includes a bonding agent and an insulating polymeric material, that is, the foregoing mixture layer of the bonding agent and the insulating polymeric material. Usually, when the fiber layer is filled with the bonding agent or the fiber layer is filled with the bonding agent and the insulating polymeric material, a film layer is residual on a surface of the fiber layer. In this embodiment of this application, the compounded insulating film layer may be this residual film layer, and the residual film layer may be thin, is preferably a uniform film layer, and usually has a relatively small thickness. A weight ratio of the bonding agent to the insulating polymeric material is 1:0.8 to 1:1.2. At a normal temperature, the insulating film layer can improve insulation performance of the battery, and at a high temperature, the insulating film layer can be melted or volatilized, so that the battery packaging material has an air permeability.

In this embodiment of this application, the insulating polymeric material is one or more of polyethylene, polypropylene, polyvinyl chloride, polyphenyl ethylene, polymethyl methacrylate, polyethylene terephthalate or polyoxymethylene, to further improve insulation performance of the battery pack sealing cover, and improve safety of the entire battery pack body. The insulating polymeric material in the insulating film layer and the insulating polymeric material filled in the fiber layer are separately independently selected. in this application, the insulating polymeric material in the insulating film layer and the insulating polymeric material filled in the fiber layer are preferably the same, and the battery packaging material of this application may be directly prepared in a soaking or in a coating manner.

In this embodiment of this application, the bonding agent is a material whose glass transition temperature is 80°C to 120°C. When an extreme situation such as collision, burning, or short-circuit occurs in the battery in a daily use process, the temperature of the internal battery increases. In this case, the bonding agent in the cover plate can be volatilized or dissolved before a risk occurs, to prevent an extreme risk such as explosion from occurring. Further, in this embodiment of this application, the bonding agent is selected from one or more of an epoxy resin or a polyurethane resin. The softening temperature of the bonding agent is relatively low, and is usually 80°C to 100°C, and sealing invalidation of the battery pack may be effectively implemented at a high temperature, thereby discharging gas inside the battery pack in time, and effectively reducing an explosion risk of the battery pack. Furthermore, in this embodiment of this application, the bonding agent is a waterborne polyurethane resin. When a fire breaks out in the power battery at a high temperature, no poisonous gas is volatilized from the bonding agent. The bonding agent in the insulating film layer and the bonding agent filled in the fiber layer are separately independently selected.

The bonding agent and the insulating polymeric material in the insulating film layer may be the same as the bonding agent and the insulating polymeric material filled in the fiber layer, or different from the bonding agent and the insulating polymeric material filled in the fiber layer, and in this application, the bonding agent and the insulating polymeric material in the insulating film layer is preferably the same as the bonding agent and the insulating polymeric material filled in the fiber layer. Specifically, a surface of the fiber layer may be coated with a slurry prepared by the bonding agent and the insulating polymeric material, the bonding agent and the insulating polymeric material are permeated into the mesh structure of the fiber layer, and the insulating film layer is usually residual on the surface of the fiber layer.

The battery packaging material of this application contains the mesh structure, the holes of the mesh structure are filled with the bonding agent, and the battery packaging material is a sealable whole. In a normal situation, the battery is waterproof, and the battery packaging material has a small weight and low costs and is insulating. Moreover, when the battery packaging material of this application is in an extreme situation, the bonding agent filled in the holes can be melted or volatilized at a high temperature, so that the battery packaging material has the mesh structure, has a ventilation function, and may effectively discharge gas generated in the battery, to alleviate an internal pressure.

Particularly, the battery pack sealing cover prepared by using the battery packaging material of this application is the same as a PP vacuum-formed plastic sealing cover in a normal situation, and the cured bonding agent and fiber jointly form a rigid sealing cover that has a relatively high strength and has a waterproof function. In an extreme situation, when a fire inside the battery pack is caused because the battery pack is short-circuited, overcharged or the like, the bonding agent on the sealing cover can be melted or volatilized at a high temperature. The sealing cover has the mesh structure, has a ventilation function, and may effectively discharge gas, to avoid a case in which gas generated in the battery in the extreme situation is quickly accumulated, to quickly increase the internal pressure of the battery pack body and cause a risk such as explosion. Moreover, the battery pack sealing cover of this application has a fire insulation function, can prevent a fire from spreading out of the battery pack body, and in particular, prevent a fire from spreading into a driving compartment, thereby improving safety of the whole vehicle and protecting a passenger of the electric vehicle from a danger. Safety performance of the battery is improved to a relatively large extent. Moreover, the battery pack sealing cover of this application has a small weight, to be favorable to lightweight of the power battery, and the battery pack sealing cover of this application is insulating and has low costs.

Moreover, this application provides a method for preparing a battery packaging material, including: providing a fiber layer, wherein the fiber layer contains a mesh structure, attaching a slurry containing a bonding agent or a slurry containing a bonding agent and an insulating polymeric material to a surface of a fiber layer, and drying. The manner of drying is not limited in this application, and may be, for example, natural air drying. This method is a preferred method for preparing the foregoing battery packaging material.

The attaching is not limited in this application, and may be, for example, performed by using a soaking method or a coating method. Preferably, the attaching a slurry containing a bonding agent or a slurry containing a bonding agent and an insulating polymeric material to a surface of a fiber layer includes: soaking a base of the fiber layer in the slurry containing the bonding agent or the mixture slurry containing the bonding agent and the insulating polymeric material, soaking the base for 10 min to 15 min, and taking out the base to dry.

The battery packaging material of this application may be widely applied to various battery packages, for example, as a casing or a cover plate of a battery cell, and preferably, is particularly applicable to a battery pack sealing cover 1. Moreover, this application provides a battery pack sealing cover 1, where a material of the battery pack sealing cover 1 includes the foregoing battery packaging material. The foregoing battery packaging material may be independently used as a material of the battery pack sealing cover 1, or may be compounded with another material. Specifically, the foregoing prepared battery packaging material may be placed in a cover plate mold and is subjected to compression molding, a mold pressure is 1500 T/M² to 1800 T/M², an upper mold temperature is 20°C to 50°C, a lower mold temperature 20°C to 50°C, a pressure holding time is 40s to 90s, and demolding is performed. Alternatively, compression molding may be first performed on a substrate of a battery pack sealing cover of a fiber layer, a slurry containing a bonding agent or a slurry containing a bonding agent and an insulating polymeric material is then attached, and drying is performed.

Moreover, this application further provides a battery pack body, including a tray 2 and a battery pack sealing cover 1 sealed with the tray 2 to form a battery accommodation space, where the battery pack sealing cover 1 is the foregoing battery pack sealing cover 1.

The tray 2 is various trays 2 publicly known by a person skilled in the art, and details are not described herein again. A shape of the tray and a shape of the battery pack sealing cover 1 are designed according to an actual requirement.

Moreover, this application further provides a power battery, including a battery pack body and a battery group located inside the battery pack body, where the battery pack body is the foregoing battery pack body. The battery group is located in a battery accommodation space formed by a tray 2 and a battery pack sealing cover 1, the battery group is usually formed by several battery cells, and a quantity of the battery cells is designed according to an actual need. According to an actual need, the power battery may include a plurality of battery pack bodies and a plurality of battery groups located inside these battery pack bodies. Structures in the existing technology may be used as other structures in the power battery, for example, a structure between battery pack bodies, an internal structure of the battery group, and another structure in a battery pack body, and details are not described herein again.

Moreover, this application provides an electric vehicle, including the foregoing power battery. In this example, only the power battery in the electric vehicle is improved, and other details are not described again.

### Embodiment 1

For example, purchased commercially available rectangular batteries are connected in parallel or connected in series according to an arrangement or function requirement of an electric vehicle, and are arranged together, a load bearing structure such as a tray 2 is used below a battery, and a battery pack sealing cover 1 is used for sealing at an upper layer. The upper layer and a lower layer are sealed in a mechanical connection manner, to implement functions of sealing, insulating and protecting the internal battery. In this embodiment, a mixture of glass fiber and carbon fiber is used to be in a mesh shape, a glass fiber filament whose diameter is 20 µm is used as the glass fiber, and 3000 fiber filaments are twisted to form a glass fiber bundle. A carbon fiber filament has a fiber diameter of 6 µm, 8000 carbon fiber filaments are twisted to form a carbon fiber bundle. Glass fiber bundles and carbon fiber bundles cross to be in the mesh shape, a formed fiber layer has a thickness of 1.3 mm, the mesh fiber layer is soaked in a mixture slurry that is of a waterborne polyurethane resin and polyphenyl ethylene and that has a softening temperature of 90°C, is soaked for 10 min, and is taken out to dry, and a part of an insulating film layer is residual on a surface of the fiber layer. A ratio of the waterborne polyurethane resin to the polyphenyl ethylene is 1:1, a compound sheet material is prepared, the compound sheet material is placed in a cover plate mold and is subjected to compression molding, a mold pressure is 1500 T/M² to 1800 T/M², an upper mold temperature is 50°C, a lower mold temperature is 50°C, a pressure holding time is 80s, and demolding is performed to prepare the battery pack sealing cover 1 of this embodiment.

A prepared battery group is placed on a purchased commercially available tray 2, and the foregoing prepared battery pack sealing cover 1 and the tray 2 are sealed, to prepare a power battery that internally contains the battery group and that is shown in FIG. 3.

### Embodiment 2

A power battery is prepared by using a method the same as that in Embodiment 1, and a difference is in that glass fiber is used to be in a mesh shape. A glass fiber filament whose diameter is 25 µm is used as the glass fiber, and 5000 fiber filaments are twisted to form a glass fiber bundle. Glass fiber bundles cross to be in the mesh shape, and a fiber layer has a thickness of 1.5 mm.

### Embodiment 3

A power battery is prepared by using a method the same as that in Embodiment 1, and a difference is in that a bonding agent is an epoxy resin (whose glass softening temperature is 80°C).

### Embodiment 4

A power battery is prepared by using a method the same as that in Embodiment 1, and a difference is in that polyethylene is used as an insulating polymeric material in a slurry.

### Comparative example 1

A power battery is prepared by using a method the same as that in Embodiment 1, and a difference is in that an existing PP vacuum-formed plastic sealing cover having a thickness of 3 mm is used as a battery pack sealing cover.

### Comparative example 2

A power battery is prepared by using a method the same as that in Embodiment 1, and a difference is in that an existing steel sealing cover having a thickness of 3 mm is used as a battery pack sealing cover.

### Comparative example 3

A power battery is prepared by using a method the same as that in Embodiment 1, and a difference is in that a multi-layered compound sealing cover that contains a glass fiber fabric layer/carbon fiber fabric layer/high-strength polyethylene fiber fabric layer/glass fiber fabric layer and that has a thickness of 1.8 mm is used as a battery pack sealing cover. The layers are bonded together by using a bonding agent.

### Performance test:

1. An external burning experiment of a battery pack is performed according to GB/T 31467.3-2015.
2. A power battery is assembled in an environment of 20°C±5°C, and thermal runaway of a battery cell at an intermediate location is implemented by using a method. A usually used thermal runaway manner is to heat an intermediate cell of a module for 5 minutes or less at a temperature of 400°C (if thermal runaway inside the cell may be stopped).

A test result is shown in Table 1.

**Table 1**

| Sample | External burning | Internal burning |
|---|---|---|
| Embodiment 1 | No explosion | No explosion |
| Embodiment 2 | No explosion | No explosion |
| Embodiment 3 | No explosion | No explosion |
| Embodiment 4 | No explosion | No explosion |
| Comparative example 1 | Explosion | Explosion |
| Comparative example 2 | Explosion | Explosion |
| Comparative example 3 | Explosion | Explosion |

The sealing cover provided in this application can effectively discharge gas generated inside a battery pack in an extreme situation, to improve safety performance of the battery pack.

The foregoing descriptions are merely exemplary embodiments of this application, but are not intended to limit this application. Any modifications, equivalent substitutions, and improvements made within the spirit and principle of this application shall fall within the protection scope of this application.

## Claims

1. A battery packaging material, comprising a fiber layer, wherein the fiber layer contains a mesh structure, and holes of the mesh structure are filled with a bonding agent.

2. The battery packaging material according to claim 1, wherein the bonding agent filled in the holes can be melted or volatilized at a high temperature, so that the battery packaging material has an air permeability.

3. The battery packaging material according to claim 2, wherein the high temperature is 80°C to 120°C.

4. The battery packaging material according to any one of claims 1 to 3, wherein the mesh structure is a fiber woven mesh structure.

5. The battery packaging material according to any one of claims 1 to 4, wherein a material of the fiber layer comprises one or two of carbon fiber or glass fiber.

6. The battery packaging material according to claim 5, wherein the mesh structure is a mesh structure formed by crossing glass fiber bundles ,or the mesh structure is a mesh structure formed by crossing carbon fiber bundles ,or the mesh structure is a mesh structure formed by crossing glass fiber bundles and carbon fiber bundles.

7. The battery packaging material according to claim 6, wherein the mesh structure is a mesh structure formed by crossing carbon fiber bundles and latitudinal glass fiber bundles.

8. The battery packaging material according to claim 7, wherein the glass fiber bundle is formed by twisting 2000 to 5000 glass fiber filaments, and the carbon fiber bundle is formed by twisting 3000 to 10000 carbon fiber filaments.

9. The battery packaging material according to claim 8, wherein the glass fiber filament has a diameter of 10 µm to 25 µm, and the carbon fiber filament has a fiber diameter of 5 µm to 8 µm.

10. The battery packaging material according to any one of claims 1 to 9, wherein the fiber layer has a thickness of 0.5 mm to 1.5 mm.

11. The battery packaging material according to any one of claims 1 to 10, wherein the holes of the mesh structure are further filled with an insulating polymeric material.

12. The battery packaging material according to claim 11, wherein a weight ratio of the bonding agent to the insulating polymeric material is 1:0.8 to 1:1.2.

13. The battery packaging material according to any one of claims 1 to 12, wherein a surface of the fiber layer is further compounded with an insulating film layer, and a material of the insulating film layer comprises a bonding agent and an insulating polymeric material.

14. The battery packaging material according to claim 13, wherein a weight ratio of the bonding agent to the insulating polymeric material is 1:0.8 to 1:1.2.

15. The battery packaging material according to any one of claims 11 to 14, wherein the insulating polymeric material is selected from one or more of polyethylene, polypropylene, polyvinyl chloride, polyphenyl ethylene, polymethyl methacrylate, polyethylene terephthalate or polyoxymethylene.

16. The battery packaging material according to any one of claims 1 to 14, wherein the bonding agent is a material whose glass transition temperature is 80°C to 120°C.

17. The battery packaging material according to claim 16, wherein the bonding agent is selected from one or more of an epoxy resin or a polyurethane resin.

18. The battery packaging material according to claim 17, wherein the bonding agent is a waterborne polyurethane resin.

19. A method for preparing the battery packaging material according to any one of claims 1 to 18, comprising attaching a slurry containing a bonding agent or a slurry containing a bonding agent and an insulating polymeric material to a surface of a fiber layer, and then drying.

20. The method for preparing the battery packaging material according to claim 19, wherein the attaching a slurry containing a bonding agent or a slurry containing a bonding agent and an insulating polymeric material to a surface of a fiber layer comprises: soaking a base of the fiber layer in the slurry containing the bonding agent or the mixture slurry containing the bonding agent and the insulating polymeric material, soaking the base for 10 min to 15 min, and taking out the base to dry.

21. A battery pack sealing cover, wherein a material of the battery pack sealing cover comprises the battery packaging material according to any one of claims 1 to 18.

22. The battery pack sealing cover according to claim 21, wherein a bonding agent of the battery pack sealing cover can be melted or volatilized when a high temperature is abnormally generated in a battery, so that the battery pack sealing cover has an air permeability.

23. A battery pack body, comprising a tray and a battery pack sealing cover sealed with the tray to form a battery accommodation space, wherein the battery pack sealing cover is the battery pack sealing cover according to claim 21 or 22.

24. A power battery, comprising a battery pack body and a battery group located inside the battery pack body, wherein the battery pack body is the battery pack body according to claim 23.

25. The power battery according to claim 24, wherein a surface of the fiber layer is compounded with an insulating film layer, and the insulating film layer is located on an outer surface of a battery pack sealing cover.

26. An electric vehicle, comprising the power battery according to claim 24 or 25.
